Europäisches Patentamt

(19) European Patent Office

Office européen des brevets

(11) Numéro de publication: **0 125 956**
**B1**

(12) **FASCICULE DE BREVET EUROPEEN**

(45) Date de publication du fascicule du brevet:
08.10.86

(51) Int. Cl.⁴: **B 01 D 33/04**

(21) Numéro de dépôt: **84400743.5**

(22) Date de dépôt: **13.04.84**

(54) Filtre horizontal à bande sans fin sous vide.

(30) Priorité: **14.04.83 FR 8306097**

(43) Date de publication de la demande:
**21.11.84 Bulletin 84/47**

(45) Mention de la délivrance du brevet:
**08.10.86 Bulletin 86/41**

(84) Etats contractants désignés:
**AT BE CH DE GB IT LI LU NL SE**

(56) Documents cités:
**FR - A - 1 421 665**
**FR - E - 47 144**
**US - A - 3 190 451**
**US - A - 4 336 139**

(73) Titulaire: **Queyroix, Christian, 29, avenue de Condé,
F-78600 Maisons Laffitte (FR)**

(72) Inventeur: **Queyroix, Christian, 29, avenue de Condé,
F-78600 Maisons Laffitte (FR)**

(74) Mandataire: **Bruder, Michel, 10 rue de la Pépinière,
F-75008 Paris (FR)**

ACTORUM AG

## Description

La présente invention concerne des perfectionnements apportés aux filtres horizontaux à bande sans fin sous vide.

On connaît déjà des filtres de ce genre qui comportent essentiellement une bande transporteuse sans fin en caoutchouc, s'étendant horizontalement entre deux tambours et présentant, en section droite, la section d'une auge lorsque des talons longitudinaux et latéraux sont présents. Le fond de cette bande présente des rainures transversales, ouvertes vers l'extérieur, permettant l'écoulement du liquide résultant de la filtration vers des orifices percés dans la partie centrale de la bande. Sur cette bande transporteuse est disposé un médium filtrant constitué, par exemple, par une toile sur laquelle est déposée la matière à filtrer. En dessous du brin supérieur de la bande transporteuse se trouve une boîte à vide s'étendant longitudinalement et dont la partie supérieure, ouverte, est située en dessous des orifices centraux de la bande transporteuse. Cette boîte à vide qui est reliée à une source de vide, recueille, par aspiration, le filtrat provenant de la masse à filtrer.

Dans de tels filtres à bande la boîte à vide qui constitue une partie importante du filtre, est soumise à des opérations fréquentes de maintenance et/ou nettoyage et à cet effet on a déjà prévu divers dispositifs de manoeuvres de la boîte à vide pour faciliter ces opérations. Les dispositifs connus de manoeuvre de la boîte à vide comprennent divers mécanismes tels que contrepoids, treuils à câbles ou chaînes, vérins pneumatiques, électriques ou hydrauliques, crémaillères, vis, crics, parallélogrammes articulés etc... (Voir, par exemple, US-A-4 336 139). Or, ces dispositifs sont peu pratiques à l'usage et ils présentent de nombreux inconvénients. En effet, les contrepoids sont encombrants surtout lorsqu'on utilise l'eau comme élément pesant. Les treuils doivent être maintenus en état de propreté et lorsque la boîte à vide est de grande longueur, il est nécessaire de manoeuvrer en bonne synchronisation plusieurs treuils, sous peine de vriller la boîte à vide. Les vérins demandent, eux, une source d'énergie particulière, une bonne protection et une maintenance suivie. Quant aux autres dispositifs mécaniques précités, ils sont coûteux et nécessitent une bonne maintenance. En outre aucun des dispositifs connus de manoeuvre de la boîte à vide ne permet également de bien distribuer l'aspiration sur toute la longueur de la boîte à vide.

Par ailleurs un autre inconvénient que présentent la plupart des filtres à bande sans fin connus à ce jour est que leur boîte à vide est réalisée d'une seule pièce en tôle de manière à présenter en section droite une forme sensiblement en U, à ouverture supérieure rétrécie, laquelle est bordée de deux ailes coplanaires latérales s'étendant vers l'extérieur. Une boîte à vide réalisée ainsi d'une seule pièce est difficile à fabriquer avec la précision suffisante et elle ne se prête pas aisément à son nettoyage et à la mise en place et/ou au déplacement de cloisons intermédiaires. Par ailleurs les deux ailes horizontales supérieures bordant la boîte à vide portent des réglettes longitudinales de glissement de la bande transporteuse, réglettes qui ont tendance à être attirées vers l'ouverture supérieure de la boîte à vide, en permanence, par suite de la dépression créée dans cette boîte.

Les filtres à bande sont également pourvus d'un mécanisme assurant la mise sous tension correcte du médium filtrant, ce mécanisme faisant appel généralement à un rouleau pesant agissant par son poids sur un brin du médium filtrant. Toutefois, les dispositifs associés permettant de soulever le rouleau pesant afin de détendre le médium filtrant, sont en général relativement compliqués et peu aisés à mettre en oeuvre.

La présente invention vise à remédier à ces divers inconvénients en procurant un filtre à bande sans fin pourvu de moyens particulièrement simples pour la manoeuvre et le nettoyage de la boîte à vide, la bonne répartition de l'aspiration sur toute la longueur de la boîte à vide et la tension du médium filtrant.

A cet effet ce filtre horizontal à bande sans fin sous vide comportant une bande transporteuse sans fin percée, dans son plan médian, de trous se déplaçant au-dessus de l'ouverture supérieure d'une boîte à vide reliée à une source de vide et s'étendant en dessous du brin supérieur et selon l'axe longitudinal de la bande transporteuse, et un médium filtrant sans fin passant sur des rouleaux de renvoi et appliqué sur le brin supérieur de la bande transporteuse, pour recevoir la masse à filtrer, est caractérisé en ce que la boîte à vide est montée à pivotement, dans son ensemble, autour d'un axe longitudinal décalé latéralement d'un côté de la bande transporteuse, cette boîte à vide étant portée par les extrémités du côté bande transporteuse de barres transversales qui sont articulées sur des paliers alignés horizontalement et matérialisant l'axe de pivotement et qui portent, à leurs autres extrémités un collecteur longitudinal rélié, d'une part, à la boîte à vide, par l'intermédiaire d'au moins une tubulure de liaison, et d'autre part, à la source de vide, par au moins un organe d'accouplement démontable.

Suivant une caractéristique complémentaire de l'invention le dispositif de contrôle de la tension du médium filtrant comporte un rouleau pesant mobile exercent une force sur le médium filtrant, ce rouleau pesant inférieur mobile étant porté par un châssis monté à coulissement vertical sur des glissières du bâti du filtre, des chaînes ou courroies accrochées au chassis mobile et passant sur des poulies supérieures de renvoi portées par le bâti et accrochées également à un contrepoids mobile verticalement, ce contrepoids étant constitué par un caisson pourvu, à sa partie supérieure, d'un orifice de remplissage et présentant sur l'une de ses faces verticales, plusieurs orifices prévus à des niveau différents et pouvant être chacun pourvus d'une vanne de vidange.

On décrira ci-après, à titre d'exemples non limitatifs, diverses formes d'exécution de la présente invention, en référence au dessin annexé sur lequel:

La figure 1 est une vue en perspective schématique et simplifiée d'un filtre horizontal à bande sans fin pourvu d'une boîte à vide suivant l'invention.

La figure 2 est une vue en perspective schématique et simplifiée d'une variante d'exécution.

La figure 3 est une vue en perspective et en coupe transversale d'une forme d'exécution de la boîte a vide.

La figure 4 est une vue en perspective du dispositif de commande de la tension du médium filtrant.

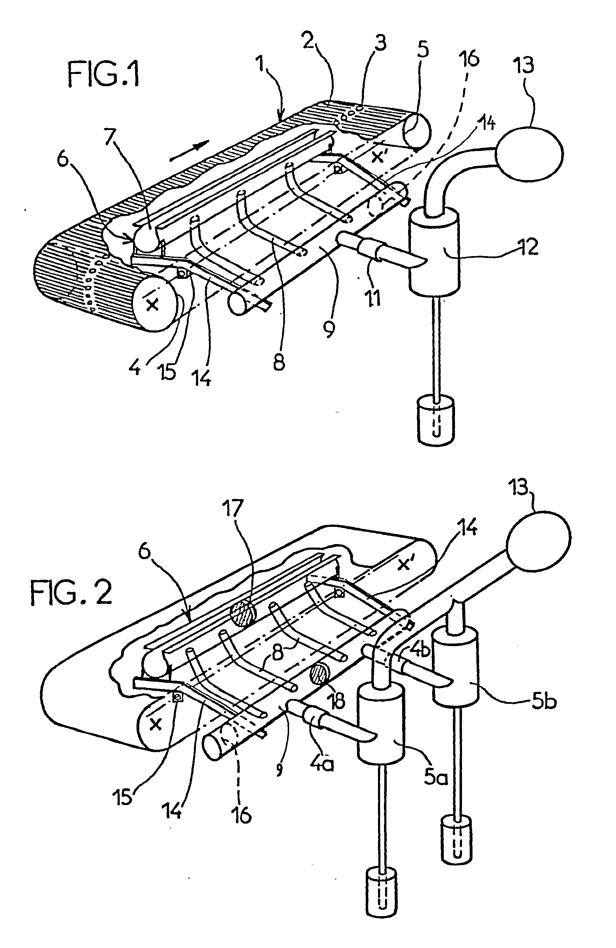

Le filtre horizontal à bande sans fin qui est représenté schématiquement et partiellement sur la figure 1, comporte une bande transporteuse sans fin 1, en caoutchouc, qui peut être pourvue, le long de ses deux bords, de talons longitudinaux et latéraux, non représentés, lui donnant en section droite la forme d'une auge. Cette bande 1 présente, dans sa surface externe, des rainures transversales 2 qui communiquent avec des trous ou orifices centraux 3 alignés dans le plan médian de la bande transporteuse 1. Sur cette bande transporteuse 1 est appliqué un médium filtrant sans fin non représenté sur lequel est déposée la masse à filtrer et qui est entraîné longitudinalement par la bande transporteuse 1. Cette bande 1 est animée d'un mouvement continu et elle passe sur deux tambours 4 et 5 d'axes horizontaux et transversaux.

Le filtre comporte également une boîte à vide longitudinale 6 qui présente une section droite sensiblement en forme de U, avec une ouverture supérieure 7 rétrécie s'étendant longitudinalement sous les trous centraux 3 de la bande 1. Cette boîte à vide 6 est reliée, par des tubulures de liaison transversales 8, à un collecteur latéral et longitudinal 9 lui-même connecté, par l'intermédiaire d'un manchon de liaison 11, à un ballon séparateur 12 relié à une source de vide 13.

Suivant l'invention l'ensemble de la boîte à vide 6 est monté à pivotement autour d'un axe longitudinal xx' décalé latéralement du côté de la bande 1 où se trouve le collecteur 9, et situé par exemple sous le plan du brin inférieur de cette bande 1. A cet effet la boîte à vide 6 est portée, au moins à ses deux extrémités, par les extrémités du côté bande transporteuse de barres transversales 14 qui sont articulées sur des paliers 15 alignés longitudinalement et matérialisant l'axe de pivotement xx', et qui portent, à leurs autres extrémités, le collecteur 9. L'ensemble formé par la boîte à vide 6, le collecteur 9 et la ou les tubulures de liaison 8 entre la boîte à vide 6 et le collecteur 9 est ainsi monté basculant, d'un bloc, autour de l'axe longitudinal xx'.

La prévision de plusieurs tubulures de liaison 8 entre la boîte à vide 6 et le collecteur 9, ces tubulures étant espacés les unes des autres dans le sens longitudinal, permet de mieux répartir l'aspiration sur toute la longueur de la boîte à vide 6.

On voit, d'après la description qui précède, que le nettoyage, la mise en place et/ou le déplacement de cloisons intermédiaires et une opération de maintenance de la boîte à vide 6 sont considérablement facilités. En effet, après avoir désaccouplé le manchon 11 qui relie le collecteur 9 au ballon séparateur 12, il est possible de faire pivoter l'ensemble formé par la boîte à vide 6 et le collecteur 9 autour de l'axe longitudinal xx'. Un mouvement de soulèvement du collecteur 9 provoque corrélativement un abaissement de la boîte à vide 6 et vice versa.

Le collecteur 9 peut comporter avantageusement une ou plusieurs capacités 16 que l'on peut remplir plus ou moins d'un lest, tel que de l'eau par exemple, afin d'assurer l'équilibrage de l'ensemble pivotant autour de l'axe xx'. Le collecteur 9 peut être également utilisé dans son ensemble comme capacité pouvant contenir une certaine quantité de lest tel que de l'eau par exemple.

Dans la forme d'exécution illustrée sur la figure 1, la boîte à vide 6 ne comporte pas de compartiments internes pour la séparation des filtrats.

Au contraire, dans la forme d'exécution illustrée sur la figure 2 la boîte à vide 6 est séparée longitudinalement en plusieurs compartiments indépendants, et ce par suite de la prévision de cloisons transversales intermédiaires 17 à l'intérieur de la boîte à vide 6. Dans ce cas, le collecteur 9 est lui aussi séparé en un nombre de compartiments indépendants égal à celui de la boîte à vide 6, et ce grâce à la prévision de cloisons transversales intermédiaires 18. Chacun des compartiments individuels du collecteur 9 est relié, par au moins une tubulure 8, au compartiment correspondant de la boîte à vide 6 et également, par un manchon d'accouplement associé, 4a, 4b, à un ballon séparateur indépendant 5a, 5b... etc., tous les ballons séparateurs 5a, 5b étant reliés à leurs tour à la source de vide 13.

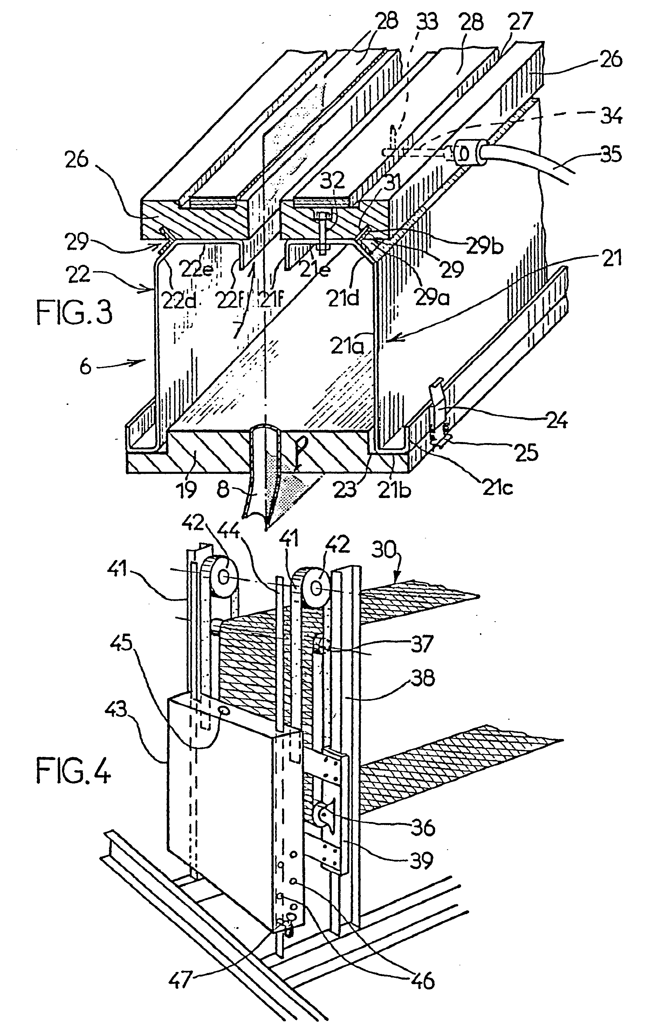

On décrira maintenant, en se référant à la figure 3, une forme d'exécution avantageuse de la boîte à vide 6. Cette boîte à vide 6 comporte un couvercle inférieur horizontal amovible 19 et deux parois latérales constituées par deux profilés à section droite identique 21, 22, disposés symétriquement par rapport au plan de symétrie longitudinal P de la boîte à vide 6. Comme les deux profilés 21, 22 sont identiques, on ne décrira en détail que la forme de l'un d'entre eux à savoir celle du profilé 21. Le profilé 21 comprend une âme verticale 21a prolongée, à son extrémité horizontale inférieure, par une gouttière en U en saillie vers l'extérieur et qui est délimitée par une aile horizontale 21b et une aile verticale 21c s'étendant vers le haut. Cette gouttière en U 21b, 21c est logée dans une entaille 23 de forme rectangulaire prévue dans l'arête supérieure du couvercle 19 s'étendant longitudinalement. Ce couvercle 19 auquel sont raccordées les tubulures 8, est maintenu attaché aux gouttières inférieures des deux profilés 21, 22, au moyen de dispositifs d'attache rapide 24 répartis longitudinalement, par exemple du type grenouillère. Chaque grenouillère 24 est par exemple fixée à l'aile verticale externe telle que 21c et elle est liée à un crochet 25 solidaire du chant vertical du couvercle 19.

L'âme verticale 21a du profilé 21 se raccorde, à son extrémité supérieure, à une aile 21d, de petite largeur, inclinée vers l'intérieur, laquelle est à son tour prolongée par une aile horizontale supérieure 21e se terminant par une aile verticale 21f repliée vers le bas. Les deux ailes verticales 21f, 22f des deux profilés 21, 22 délimitent entre elles l'ouverture supérieure 7 de la boîte à vide 6, ouverture qui est située sous les trous centraux 3 de la bande transporteuse 1. La boîte à vide 6 présente sensiblement une forme rectangulaire en section droite, forme qui donne la section utile maximale pour le passage de l'air à l'intérieur. En outre sa fabrication est particulièrement simple puisqu'elle est réalisée à partir de deux profilés identiques 21, 22 pliés à froid. On voit également que le couvercle 19 de la boîte à vide 6 est aisément démontable par dessous, ce qui permet le nettoyage de la boîte à vide, la mise en place et/ou le déplacement de cloisons intermédiaires, et ce très facilement sans avoir à démonter totalement la boîte à vide ou à la faire basculer. En outre, cette boîte à vide est très rigide et rectiligne, cette rigidité étant obtenue par des entretoises transversales (non représentées) reliant, à des intervalles appropriés, les deux profilés 21 et 22.

Sur les ailes horizontales supérieures 21e, 22e des profilés 21, 22 sont montées des réglettes longitudinales de glissement 26 qui présentent chacune, dans leur face supérieure, une rainure 27 à section droite rectangulaire et dans laquelle se déplace une courroie sans fin de glissement 28. La bande transporteuse sans fin 1 prend appui sur les deux courroies parallèles 28 qui sont entraînées par friction. En fonctionnement, du fait de la dépression régnant à l'intérieur de la boîte à vide 6, les deux réglettes de glissement 26 ont tendance à être entraînées vers le plan de symétrie longitudinal P, c'est-à-dire vers l'ouverture centrale 7. Pour leur permettre de résister à cette tendance, il est prévu, sur chacune des ailes inclinées 21d, 22d, une cornière 29 soudée, par l'une de ses ailes 29a, à l'aile 21d, 22d et dont l'autre aile 29b, qui se trouve ainsi inclinée vers le haut et vers l'extérieur, est engagée dans une rainure longitudinale de même inclinaison 31 ménagée dans la face inférieure de chaque réglette de glissement 26. De ce fait chacune des réglettes 26 est retenue fermement par la cornière correspondante 29 et elle ne peut glisser vers l'ouverture centrale 7. La fixation des réglettes de glissement 26 sur les ailes horizontales supérieures 21e, 22e est complétée par des boulons verticaux 32 dont les écrous peuvent être soudés à l'intérieur de la boîte à vide, ces boulons empêchant les réglettes de glissement 26 de glisser vers l'avant sous l'action de la friction des courroies sans fin de glissement 28 ou de la bande transporteuse lorsqu'on n'utilise pas les courroies 28.

On assure une lubrification de la surface de frottement entre chaque courroie de glissement 28 et le fond de la rainure correspondante 27 ou entre la bande transporteuse 1 et la face supérieure de la réglette de glissement 26, grâce à la prévision, dans chaque réglette 26, de trous verticaux 33 débouchant dans le fond de la rainure 27, lorsqu'on utilise une courroie de glissement 28, et communiquant avec des trous horizontaux et transversaux 34 percés dans chaque réglette 26, et dont les orifices externes sont reliés à des canalisations 35 elles-mêmes connectées à une source d'eau sous pression. On peut ainsi maintenir en permanence un film d'eau assurant la lubrification entre chaque courroie de glissement 28 et le fond de la rainure 27 ou entre la bande transporteuse 1 et la réglette de glissement 26. La surface supérieure de glissement peut présenter des usinages permettant de répartir le film d'eau.

Chaque courroie de glissement 28 présente avantageusement une structure telle qu'elle permet d'obtenir un bon coefficient de glissement aussi bien latéral que frontal. A cet effet chaque courroie 28 est avantageusement constituée par une structure stratifiée formée d'une succession de couches constituées alternativement d'un tissu, par exemple en fibres de polyester ou de coton, et d'un élastomère.

La figure 4 illustre la façon dont la tension du médium filtrant 30 peut être contrôlée d'une manière particulièrement aisée. On voit sur cette figure que le médium filtrante 30 passe sous un rouleau pesant 36 d'axe transversal puis remonte verticalement et est renvoyé horizontalement par un autre rouleau 37. Le rouleau pesant inférieur mobile 36 est porté par un châssis 39 monté à coulissement vertical sur des glissières du bâti 38 du filtre. A ce châssis sont accrochées des chaînes ou courroies 41 passant sur des poulies de renvoi supérieures 42 portées par le bâti 38 et accrochées également à un contrepoids 43 mobile verticalement. Ce contrepoids qui est guidé par des colonnes 44, est constitué par un caisson parallélépipédique pourvu, à sa partie supérieure, d'un orifice de remplissage 45. Ce caisson présente également, sur l'une de ses faces verticales, un certain nombre d'orifices 46 prévus à des hauteurs différentes et pouvant être pourvus chacun d'une vanne de vidange 47.

Il est ainsi possible, en introduisant dans le contrepoids 43 en forme de caisson une quantité variable d'eau, de faire varier l'effort s'exerçant vers le haut sur le châssis 39 portant le rouleau pesant 36 et par conséquent de compenser plus ou moins le poids de ce rouleau, ce qui permet d'ajuster la tension du médium filtrant 30.

Lorsque l'on désire mettre ce médium hors tension, en vue de son changement par exemple, il suffit de remplir le caisson 43 d'eau, par l'orifice supérieur 45, de telle façon que le caisson 43, devenu plus lourd que l'ensemble pesant constitué par le rouleau inférieur 36 et le châssis 39, provoque une montée de cet ensemble et par conséquent un relâchement du médium filtrant 30.

Une fois le changement de médium filtrant opéré, on ouvre la vanne 47 correspondant au niveau d'eau final que l'on désire obtenir dans le caisson 43, afin d'évacuer une certaine quantité d'eau et de réduire le poids du caisson 43. De ce fait l'ensemble pesant 36, 39 redescend, en faisant remonter le caisson 43, et à l'équilibre il crée sur le médium 30 une tension qui dépend du niveau d'eau demeurant dans le caisson contrepoids 43.

**Revendications**

1. Filtre horizontal à bande sans fin sous vide comportant une bande transporteuse sans fin percée, dans son plan médian, de trous se déplaçant au-dessus de l'ouverture supérieure d'une boîte à vide reliée à une source de vide et s'étendant en dessous du brin supérieur et selon l'axe longitudinal de la bande transporteuse, et un médium filtrant sans fin passant sur des rouleaux de renvoi et appliqué sur le brin supérieur de la bande transporteuse, pour recevoir la masse à filtrer, caractérisé en ce que la boîte à vide (6) est montée à pivotement, dans son ensemble, autour d'un axe longitudinal (xx') décalé latéralement d'un côté de la bande transporteuse (1), cette boîte à vide (6) étant portée par les extrémités du côté bande transporteuse de barres transversales (14) qui sont articulées sur des paliers (15) alignés horizontalement et matérialisant l'axe de pivotement (xx') et qui portent, à leurs autres extrémités, un collecteur longitudinal (9) relié, d'une part, à la boîte à vide (6), par l'intermédiaire d'au moins une tubulure de liaison (8), et d'autre part, à la source de vide (13), par au moins un manchon d'accouplement démontable (11, 4a, 4b).

2. Filtre horizontal suivant la revendication 1, caractérisé en ce que le collecteur (9) est relié à la boîte à vide (6) par plusieurs tubulures de liaison (8) espacées les unes des autres dans le sens longitudinal, pour répartir l'aspiration sur toute la longueur de la boîte à vide (6).

3. Filtre horizontal suivant l'une quelconque des revendications 1 et 2, caractérisé en ce que le collecteur comporte au moins une capacité (16) pouvant être plus ou moins lestée pour assurer l'équilibrage de l'ensemble pivotant autour de l'axe longitudinal (xx').

4. Filtre horizontal suivant l'une quelconque des revendications 1 et 2, caractérisé en ce que le collecteur est utilisé dans son ensemble comme capacité pouvant contenir une certaine quantité de lest pour l'équilibrage.

5. Filtre horizontal suivant l'une quelconque des revendications précédentes caractérisé en ce que la boîte à vide (6) est séparée longitudinalement, par des cloisons transversales intermédiaires (17), en compartiments indépendants et le collecteur (9) est également séparé en un même nombre de compartiments indépendants, par des cloisons transversales intermédiaires (18), chacun des compartiments individuels du collecteur (9) étant relié, par au moins une tubulure (8), au compartiment correspondant de la boîte à vide (6) et également, par un manchon d'accouplement associé (4a, 4b) à un ballon séparateur indépendant (5a, 5b), tous les ballons séparateurs (5a, 5b) étant reliés à la source de vide (13).

6. Filtre horizontal suivant l'une quelconque des revendications précédentes caractérisé en ce que la boîte à vide (6) comporte un couvercle inférieur horizontal amovible (19) et deux parois latérales constituées par deux profilés à section droite identique (21, 22), disposé symétriquement par rapport au plan de symétrie longitudinal (P) de la boîte à vide (6).

7. Filtre horizontal suivant la revendication 6 caractérisé en ce que chacun des profilés (21, 22) constituant les parois latérales de la boîte à vide (6) comprend une âme verticale (21a) prolongée, à son extrémité inférieure, par une gouttière en U en saillie vers l'extérieur et qui est délimitée par une aile horizontale inférieure (21b) et une aile verticale (21c) s'étendant vers le haut, cette gouttière en U (21b, 21c) étant logée dans une entaille (23) de forme rectangulaire prévue dans l'arête supérieure du couvercle (19), ce couvercle (19) étant maintenu attaché aux gouttières inférieures des deux profilés (21, 22) au moyen de dispositifs d'attache rapide (24), et l'âme verticale (21a) de chaque profilé (21, 22) se raccorde, à son extrémité supérieure, à une aile (21d, 22d), de petite largeur, inclinée vers l'intérieur, laquelle est à son tour prolongée par une aile horizontale supérieure (21e) se terminant par une aile verticale (21f) repliée vers le bas, les deux ailes verticales (21f, 22f) des deux profilés (21, 22) délimitant entre elles l'ouverture supérieure (7) de la boîte à vide (6).

8. Filtre horizontal suivant la revendication 7, caractérisé en ce que sur chacune des ailes inclinées (21d, 22d) des deux profilés (21, 22) est soudée, par l'une des ailes (29a), une cornière (29) dont l'autre aile (29b), inclinée vers le haut et vers l'extérieur, est engagé dans une rainure longitudinale de même inclinaison (31) ménagée dans la face inférieure d'une réglette de glissement (26) montée sur l'aile horizontale supérieure (21e, 22e) du profilé correspondant (21, 22) et qui peut présenter, dans sa face supérieure, une rainure (27) dans laquelle se déplace une courroie sans fin de glissement (28) sur laquelle prend appui la bande transporteuse (1).

9. Filtre horizontal suivant la revendication 8, caractérisé en ce que chaque réglette (26) est percée de trous verticaux (33) débouchant sur la face supérieure de la réglette (26), ou dans le fond de la rainure (27) lorsque on utilise une courroie de glissement (28), ces trous (33) communiquant avec des trous horizontaux et transversaux (34) percés dans chaque réglette (26) et dont les orifices externes sont reliés à des canalisations (35) elles-mêmes connectées à une source d'eau sous pression pour maintenir en permanence un film d'eau assurant la lubrification entre chaque courroie de glissement (28) et le fond de la rainure (27) ou entre la bande transporteuse (1) et la face supérieure de la réglette (26) laquelle peut présenter des usinages permettant de répartir le film d'eau.

10. Filtre horizontal suivant l'une quelconque des revendications 8 et 9, caractérisé en ce que chaque courroie de glissement (28) est constituée par une structure stratifiée formée d'une succession de couches constituées alternativement d'un tissu, par exemple en fibre de polyester ou de coton, et d'un élastomère.

11. Filtre horizontal suivant l'une quelconque des revendications précédentes, caractérisé en ce que le dispositif de contrôle de la tension du médium filtrant (30) comporte un rouleau pesant mobile (36) exerçant une force sur le médium filtrant (30), ce rouleau pesant inférieur mobile étant porté par un châssis (39) monté à coulissement vertical sur des glissières du bâti (38) du filtre, des chaînes ou courroies (41) accrochées au châssis mobile (39) et passant sur des poulies supérieures de renvoi (42) portées par le bâti (38) et accrochées également à un contrepoids (43) mobile verticalement, ce contrepoids étant constitué par un caisson pourvu, à sa partie supérieure, d'un orifice de remplissage (45) et présentant sur l'une de ses faces verticales, plusieurs orifices (46) prévus à des niveaux différents et pouvant être chacun pourvus d'une vanne de vidange (47).

**Patentansprüche**

1. Horizontaler Endlosband-Vakuumfilter, umfassend ein Endlosförderband, das in seiner mittleren Ebene von Löchern durchsetzt ist, die sich oberhalb der oberen Öffnung eines Vakuumkastens versetzen bzw. verschieben, der mit einer Vakuumquelle verbunden ist und sich unterhalb des oberen Trums bzw. Teilstückes und entlang der Längsachse des Förderbandes erstreckt und ein Endlosfiltermedium, das über Unterbandrollen läuft und auf das obere Trum bzw. Teilstück des Förderbandes aufgebracht ist, um die zu filternde Masse aufzunehmen, dadurch gekennzeichnet, dass der Vakuumkasten (6) in seiner Gesamtheit um eine Längsachse (xx') verschwenkbar ist, die seitlich auf eine Seite des Förderbandes (1) versetzt ist, wobei der Vakuumkasten (6) von den auf der Seite des Förderbandes gelegenen Enden von Querstangen (14) getragen wird, die auf Lagern (15) angelenkt sind, die horizontal ausgerichtet sind und die Schwenkachse (xx') bilden, und an ihren anderen Enden einen sich in Längsrichtung erstreckenden Sammelbehälter (9) tragen, der einerseits mit dem Vakuumkasten (6) unter Zwischenschaltung wenigstens einer Verbindungsrohrleitung (8) und andererseits mit der Vakuumquelle (13) mittels wenigstens einer lösbar befestigten Kupplungsmuffe (11, 4a, 4b) verbunden ist.

2. Horizontaler Filter nach Anspruch 1, dadurch gekennzeichnet, dass der Sammelbehälter (9) mit dem Vakuumkasten (6) mittels mehrerer Verbindungsrohrleitungen (8) verbunden ist, die im Abstand voneinander in Längsrichtung angeordnet sind, um die Ansaugung über die gesamte Länge des Vakuumkasten (6) zu verteilen.

3. Horizontaler Filter nach Anspruch 1 oder 2, dadurch gekennzeichnet, dass der Sammelbehälter zumindest ein Volumen bzw. einen Raum (16) aufweist, das (der) mehr oder weniger mit Ballast beladen sein kann, um das Gleichgewicht der um die Längsachse (xx') verschwenkbaren Anordnung zu gewährleisten.

4. Horizontaler Filter nach Anspruch 1 oder 2, dadurch gekennzeichnet, dass der Sammelbehälter zur Gänze als Volumen bzw. Raum verwendet wird, das bzw. der eine gewisse Menge an Ballast für die Einstellung des Gleichgewichtes enthalten kann.

5. Horizontaler Filter nach einem der vorhergehenden Ansprüche, dadurch gekennzeichnet, dass der Vakuumkasten (6) in Längsrichtung durch querverlaufende Zwischentrennwände (17) in unabhängige Abteile unterteilt ist und dass der Sammelbehälter (9) ebenfalls in eine gleiche Anzahl von unabhängigen Abteilen durch querverlaufende Zwischenwände (18) getrennt ist, wobei jedes der einzelnen Abteile des Sammelbehälters (9) mittels einer Rohrleitung (8) mit dem entsprechenden Abteil des Vakuumkastens (6) und gleichfalls mittels einer zugeordneten Kupplungsmuffe (4a, 4b) mit einem unabhängigen Trennballon bzw. -kolben (5a, 5b) verbunden ist, wobei alle Trennballone (5a, 5b) mit der Vakuumquelle (13) verbunden sind.

6. Horizontaler Filter nach einem der vorhergehenden Ansprüche, dadurch gekennzeichnet, dass der Vakuumkasten (6) eine untere, horizontale, lösbare Abdeckung (19) und zwei seitliche Wände aufweist, die von zwei Profilen (21), 22) von identischem Querschnitt gebildet werden, die symmetrisch in bezug auf die Längssymmetrieebene (P) der Vakuumkammer (6) angeordnet sind.

7. Horizontaler Filter nach Anspruch 6, dadurch gekennzeichnet, dass jedes der Profile (21, 22), die die Seitenwände der Vakuumkammer (6) bilden, einen vertikalen Steg (21a) aufweist, der an seinem unteren Ende von einer U-förmigen, nach aussen vorspringenden Rinne verlängert ist, die von einem unteren horizontalen Flügel (21b) und einem vertikalen, sich nach oben erstreckenden Flügel (21c) begrenzt ist, wobei diese U-förmige Rinne (21b, 21c) in einer Kerbe (23) von rechteckigem Querschnitt untergebracht ist, die in der oberen Kante der Abdeckung (19) vorgesehen ist und die Abdeckung (19) an den unteren Rinnen der beiden Profile (21, 22) mittels Schnellbefestigungseinrichtungen (24) festgehalten wird, wobei der vertikale Steg (21a) jedes Profils (21, 22) an seinem oberen Ende an einem Flügel (21d, 22d) von geringer Breite anschliesst, der nach innen geneigt ist und seinerseits von einem oberen horizontalen Flügel (21e) verlängert ist, der in einen vertikalen, nach unten gebogenen Flügel (21f) ausläuft, und wobei die beiden vertikalen Flügel (21f, 22f) der beiden Profile (21, 22) zwischen sich die obere Öffnung (7) der Vakuumkammer (6) begrenzen.

8. Horizontaler Filter nach Anspruch 7, dadurch gekennzeichnet, dass auf jedem der geneigten Flügel (21d, 22d) der beiden Profile (21, 22) ein Winkelprofil (29) mit einem seiner Flügel (29a) aufgeschweisst ist, dessen anderer Flügel (29b) der nach oben und aussen geneigt ist, mit einer Längsnut (31) der gleichen Neigung in Eingriff steht, die in der unteren Fläche einer Gleitleiste (26) ausgebildet ist, die auf dem oberen horizontalen Flügel (21e, 22e) des entsprechenden Profils (21, 22) ausgebildet ist und die in ihrer oberen Fläche eine Nut (27) aufweisen kann, in der ein endloser Gleitriemen (28) läuft, auf dem das Förderband (1) abgestützt ist.

9. Horizontaler Filter nach Anspruch 8, dadurch gekennzeichnet, dass jede Leiste (26) von vertikalen Löchern (33) durchsetzt ist, die auf der oberen Fläche der Leiste (26) oder im Boden der Nut (27) münden, wenn ein Gleitriemen (28) verwendet wird, dass diese Löcher (33) mit horizontalen und in Querrichtung verlaufenden Löchern (34) kommunizieren, die in jeder Leiste (26) gebohrt und deren äussere Öffnungen mit Kanälen bzw. Leitungen (35) verbunden sind, die ihrerseits mit einer Druckwasserquelle verbunden sind, um permanent einen Wasserfilm aufrechtzuerhalten, der die Schmierung zwischen jedem Gleitriemen (28) und dem Boden der Nut (27) oder zwischen dem Förderband (1) und der oberen Fläche der Leiste (26) aufrechterhält, die mit Einrichtungen zur Verteilung des Wasserfilms versehen sein kann.

10. Horizontaler Filter nach einem der Ansprüche 8 oder 9, dadurch gekennzeichnet, dass jeder Gleitriemen (28) von einer laminierten Anordnung gebildet ist, die aus einer Aufeinanderfolge von Schichten besteht, die abwechselnd aus einem Gewebe, wie z.B. aus Polyester- oder Baumwollfasern, und einem Elastomer bestehen.

11. Horizontaler Filter nach einem der vorhergehenden Ansprüche, dadurch gekennzeichnet, dass die Vorrichtung für die Kontrolle bzw. Steuerung der Spannung des Filtermediums (30) eine schwere bewegbare Rolle (36) umfasst, die das Filtermedium (30) mit einer Kraft beaufschlagt, wobei diese untere bewegbare schwere Rolle von einem Gestell (39) getragen ist, des vertikal gleitend auf den Gleitschienen des Rahmens (38) des Filters getragen ist, wobei Ketten oder Riemen (41) vorgesehen sind, die am bewegbaren Gestell (39) verankert sind und über obere Umlenktrommeln (42) laufen, die vom Rahmen (38) getragen und ebenfalls an einem vertikal bewegbaren Gegengewicht (43) verankert sind, und wobei dieses Gegengewicht von einem Behälter gebildet ist, der in seinem oberen Abschnitt mit einer Füllöffnung (45) versehen ist und auf einer seiner vertikalen Flächen mehrere Öffnungen (46) aufweist, die auf verschiedenen Höhen vorgesehen sind und von denen jede mit einem Entleerungsventil (47) versehen sein kann.

**Claims**

1. A horizontal endless belt vacuum filter comprising an endless belt pierced, in its median plane, with holes moving above the upper opening of a vacuum box connected to a source of vacuum and extending beneath the upper side and along ther longitudinal axis of the conveyor belt, an endless filtering medium passing over guide rollers and applied on the upper side of the conveyor belt, in order to receive the mass to be filtered, characterized in that the vacuum box (6) is mounted to pivot, as a whole, about a longitudinal axis (x,x') offset laterally on one side of the conveyor belt (1), this vacuum box (6) being borne by the ends, located on the side of the conveyor belt, of transverse bars (14) which are articulated on horizontally aligned bearings (15) materializing the pivot axis (x,x') end which bear, at their other ends, a longitudinal manifold (9) connected on the one hand to the vacuum box (6), via at least one connecting pipe (8), and on the other hand to the source of vacuum (13), by at least one dismountable coupling sleeve.

2. A horizontal endless belt vacuum filter according to claim 1, wherein the manifold (9) is connected to the vacuum box (6) through several connecting pipes (8), these pipes being spaced apart from one another in the longitudinal direction in order to distribute the suction over the whole length of the vacuum box (6).

3. A horizontal endless belt vacuum filter according to any of claims 1 and 2, wherein the manifold (9) comprises at least one chamber (16) which may be filled more or less with a ballast, in order to ensure balance of the assembly pivoting about the longitudinal axis (x,x').

4. A horizontal endless belt vacuum filter according to any of claims 1 and 2, wherein the whole of the manifold is used as chamber adapted to contain a certain quantity of ballast.

5. A horizontal endless belt vacuum filter according to any of the preceding claims wherein the vacuum box (6) is separated longitudinally into several independent compartments, and this further to the provision of intermediate transverse partitions (17) within the vacuum box (6), the manifold (9) is also separated into a number of independent compartments equal to that of the vacuum box, due to the provision of intermediate transverse partitions (18), each of the individual compartments of the manifold (9) being connected, by at least one pipe (8), to the corresponding compartment of the vacuum box (6) and also, by a coupling sleeve (4a, 4b) associated therewith, to an independent separator member (5a, 5b), all the separator members (5a, 5b) being connected in turn to the source of vaccum (13).

6. A horizontal endless belt vacuum filter according to any of the preceding claims, wherein the vacuum box (6) comprises a removable horizontal lower cover (19) and two lateral walls constituted by two sections (21, 22) of identical cross-section, disposed symmetrically with respect to the longitudinal plane of symmetry (P) of the vacuum box (6).

7. A horizontal endless belt vacuum filter according to claim 6, wherein each of the sections (21, 22), forming the lateral walls of the vacuum box (6), comprises a vertical web (21a) extended, at its lower end, by an outwardly projecting U-shaped gutter which is defined by a horizontal lower flange (21b) and an upwardly extending vertical flange (21c), this U-shaped gutter (21b, 21c) being housed in a notch (23) of rectangular shape provided in the upper edge of the cover (19), this cover (19) being maintained attached to the lower gutters of the two sections (21, 22) by means of rapid-fastening devices (24) and the vertical web (21a) of each section (21, 22) is connected, at its upper end, to a flange (21d, 22d) of small width, inclined inwardly, which is in turn extended by upper horizontal web (21e) terminating in a vertical flange (21f) bent downwardly, the two vertical flanges (21f, 22f) of the two sections (21, 22) defining therebetween the upper opening (7) of the vacuum box (6).

8. A horizontal endless belt vacuum filter according to claim 7, wherein an angle (29) is welded, by one of its flanges (29a), on each of the inclined flanges (21d, 22d) of each section (21, 22) and of which the other flange (29b), which is thus inclined upwardly and outwardly, is engaged in a longitudinal groove (31) of the same inclination made in the lower face of a slide strip (26) mounted on the upper horizontal flange (21e, 22e) of the corresponding section (21, 22) and which may present, in its upper face, a groove (27) in which moves an endless sliding belt carrying the conveyor belt (1).

9. A horizontal endless belt vacuum filter according to claim 8, wherein each slide strip (26) is pierced of vertical holes (33) opening on the upper surface of the strip (26) or in the bottom of the groove (27) when a slide belt (28) is used, and communicating with horizontal, transverse holes (34) pierced in each slide strip (26) and whose outer orifices are connected to pipes (35) themselves connected to a source of water pressure so that a film of water may thus be permanently maintained which ensures lubrication between each slide belt (28) and the bottom of the groove (27) or between the conveyor belt (1) and the upper surface of the slide strip (26) which may present machinings which enable the film of water to be distributed.

10. A horizontal endless belt vacuum according to any of claims 8 and 9, wherein each slide belt (28) is constituted by a laminated structure formed by a succession of layers constituted alternately by a fabric, for example made of polyester or cotton fibers, and by an elastomer.

11. A horizontal endless belt vacuum according to any of the preceding claims, wherein the device for controlling the tension of the filtering medium (30) comprises a lower mobile weighty roller (36) exerting a force on the filtering medium (30), this lower mobile weighty roller being borne by a chassis (39) mounted to slide vertically on slides of the frame (38) of the filter, chains or belts (41), hooked on the mobile chassis (39) and passing over upper guide pulleys (42) borne by the frame (38) and also hooked on a vertically mobile conterweight (43), this counterweight being constituted by a box provided, in its upper part, with a filling orifice (45) and presenting, on one of its vertical faces, a plurality of orifices (46) provided at different levels and each being adapted to be provided with an emptying valve (47).

FIG.1

FIG. 2

FIG.3

FIG.4